# EUROPEAN PATENT APPLICATION

(11) **EP 3 536 589 A1**
(43) Date of publication of application: **11.09.2019**
(21) Application number: 19305277.6
(22) Date of filing: 08.03.2019
(51) Int. Cl.: B62K 1/00, B62K 11/00

(54) **SELF-BALANCING VEHICLE WITH GENERALLY SPHERICAL SHAPE**

(30) Priority: 08.03.2018 FR 1870254
(71) Applicant: Simeray, Marc Daniel, 78700 Conflans Sainte Honorine (FR)
(72) Inventor: Simeray, Marc Daniel, 78700 Conflans Sainte Honorine (FR)
(74) Representative: Cabinet Plasseraud

(57) **Abstract**

In an aspect, a vehicle is provided that includes a frame, a wheel, first and second footrests, a motor and a control system. The wheel further has a longitudinal radius and a lateral radius that is within 10% of the longitudinal radius. Each footrest has a foot support surface and is movable between a folded position, and a deployed position for supporting a foot of a user. The vehicle possesses a generally spherical outer shape. The center of mass is less than a quarter of the longitudinal radius of curvature away from the geometric center of the wheel. The motor drives rotation of the wheel relative to the frame. The control system controls operation of the motor based at least in part on an orientation of the self-balancing vehicle.

## Description

### CROSS-REFERENCE TO RELATED APPLICATIONS

This application claims the benefit of French patent application 1870254 filed March 8, 2018, the contents of which are incorporated herein by reference in their entirety.

### FIELD

The specification relates generally to a self-balancing vehicle, and in particular, the following relates to one-wheeled self-balancing vehicles with a single central drive wheel and first and second footrests.

### BACKGROUND OF THE DISCLOSURE

The motorized transport vehicle, invented by Simeray (US patent US8616313B2) has been a notable success since 2013. It constitutes a fun and agile means of micro transportation. However, the popularity of the vehicle is hindered by a learning curve, requiring the non-intuitive beginner's balance, and a high device weight (often greater than 12 kilograms).

Mainly equipped with tires having a diameter of 14 or 16 inches, the tread of the tire is narrow (usually around 2 inches). The transverse balance is even more difficult to achieve as the transverse radius of curvature of the tire is small. This difficulty remains for experienced users in terms of fatigue felt after heavy use. The precarious transversal balance has led some manufacturers to equip the motorized transport vehicle with dual tires, which makes the motorized transport vehicle more stable, but which hinders driving when it comes to turning. In light of the rapid success of gyro skateboards (also known as hoverboards) which do not require extensive learning in order to turn without falling, the lack of transverse balance appears to be a major obstacle for large-scale use of motorized transport vehicles.

The high weight of the device has also led some companies to equip the motorized transport vehicle with a telescopic cane (such a trolley) to enable users to transport them without having to carry them. The aesthetics of the product is relegated to the background in favor of practicality.

Additionally, Community design registration number 004425924 held by M SIMERAY is for an industrial design for a generally spherical device.

### SUMMARY OF THE DISCLOSURE

In one aspect, there is provided a self-balancing vehicle that facilitates learning how to ride the device by introducing an intuitive transverse balance and increased stability relative to some other self-balancing vehicles.

In another aspect, a vehicle is provided that includes a frame, a wheel, a first footrest and a second footrest, a motor and a control system. The wheel is rotatably supported on the frame about an axis of rotation. The wheel has a longitudinal axis, and has a lateral axis that is coaxial with the axis of rotation, and has a geometric center that is on the axis of rotation and on the longitudinal axis. The wheel further has a ground engagement surface that has a longitudinal radius of curvature and a lateral radius of curvature that is at most 10% greater or less than the longitudinal radius of curvature. The first footrest is located on a first side of the wheel and a second footrest located on a second side of the wheel. Each of the first and second footrests has a foot support surface and is movable relative to the frame between a folded position in which the foot support surface is adjacent a respective one of the first and second sides of the wheel, and a deployed position in which the foot support surface faces upwards for receiving and supporting a foot of a user. The self-balancing vehicle is positionable in a stowage position in which the first and second footrests are in the folded position. The self-balancing vehicle possesses a generally spherical outer shape. The center of mass is less than a quarter of the longitudinal radius of curvature away from the geometric center of the wheel. The self-balancing vehicle is positionable in a use position in which the first and second footrests are in the deployed position. The motor drives rotation of the wheel relative to the frame. The control system controls operation of the motor based at least in part on an orientation of the self-balancing vehicle.

Optionally, at least one of the footrests has an exterior surface with a support structure extending therefrom. A first portion of the support structure is positioned longitudinally forward of the lateral axis of the wheel and a second portion of the support structure is positioned longitudinally rearward of the lateral axis of the wheel, such that the self-balancing vehicle is tippable laterally when in the use position such that the support structure engages the ground and cooperates with a ground-engaging point on the wheel to stably support the self-balancing vehicle when a user stands on said at least one of the footrests.

Optionally, the control system is programmed for detecting a presence of a user on the vehicle, and is programmed to initiate self-balancing of the motor based on said detecting of a presence of the user on the vehicle. Optionally, the control system is programmed to determine that the user is present on the vehicle based on at least one of the following conditions: whether a sufficient force is applied to each of the first and second footrests; and whether the vehicle is within a selected activation angle from horizontal. Optionally, the control system is programmed to lock the motor rotationally prior to detecting a presence of the user on the vehicle.

In another example, a vehicle is provided that includes a frame, a wheel, a first footrest and a second footrest, a motor and a control system. The wheel has a longitudinal axis, and has a lateral axis that is coaxial with the axis of rotation, and has a geometric center that is on the axis of rotation and on the longitudinal axis. The first footrest is located on a first side of the wheel and a second footrest located on a second side of the wheel. Each of the first and second footrests has a foot support surface and is movable relative to the frame between a folded position in which the foot support surface is adjacent a respective one of the first and second sides of the wheel, and a deployed position in which the foot support surface faces upwards for receiving and supporting a foot of a user. The self-balancing vehicle is positionable in a stowage position in which the first and second footrests are in the folded position. The center of mass is less than a quarter of the longitudinal radius of curvature away from the geometric center of the wheel. The self-balancing vehicle is positionable in a use position in which the first and second footrests are in the deployed position. The motor drives rotation of the wheel relative to the frame. The control system controls operation of the motor based at least in part on an orientation of the self-balancing vehicle. The first footrest has a handle thereon and is tipped during carrying of the vehicle from an upright position into a carrying position in which the handle is at a top of the vehicle. The self-balancing vehicle further comprises a latch member and a latch receiving surface. The latch member is pivotably connected to one of the frame and the first footrest about a latch pivot axis between a locking position in which the latch member engages the latch receiving surface to lock the first footrest in the folded position, and a release position in which the latch member is disengaged from the latch receiving surface to permit the first footrest to move to the deployed position. The latch receiving surface is on the other of the frame and first footrest. The latch member has a center of mass that is offset from the latch pivot axis, such that when the self-balancing vehicle is in the upright position the center of mass of the latch member causes the latch member to pivot to the release position and when the self-balancing vehicle is in the carrying position, the center of mass of the latch member causes the latch member to pivot to the locking position.

Optionally, for each footrest of the first and second footrests, the footrest is magnetically held by a magnetic force to a remainder of the self-balancing vehicle when the footrest is in the folded position, wherein the magnetic force is sufficiently strong to hold a weight of the footrest when in the folded position when the self-balancing vehicle is oriented with the footrest at a bottom of the self-balancing vehicle, and is sufficiently weak so as to be unable to hold a weight of the remainder of the self-balancing vehicle against the footrest in the folded position when the self-balancing vehicle is oriented with the footrest at a top of the self-balancing vehicle.

In yet another example, a vehicle is provided that includes a frame, a wheel, a first footrest and a second footrest, a motor and a control system. The wheel has a longitudinal axis, and has a lateral axis that is coaxial with the axis of rotation, and has a geometric center that is on the axis of rotation and on the longitudinal axis. The first footrest is located on a first side of the wheel and a second footrest located on a second side of the wheel. Each of the first and second footrests has a foot support surface and is movable relative to the frame between a folded position in which the foot support surface is adjacent a respective one of the first and second sides of the wheel, and a deployed position in which the foot support surface faces upwards for receiving and supporting a foot of a user. The self-balancing vehicle is positionable in a stowage position in which the first and second footrests are in the folded position. The center of mass is less than a quarter of the longitudinal radius of curvature away from the geometric center of the wheel. The self-balancing vehicle is positionable in a use position in which the first and second footrests are in the deployed position. The motor drives rotation of the wheel relative to the frame. The control system controls operation of the motor based at least in part on an orientation of the self-balancing vehicle. The first footrest has a handle thereon and is tipped during carrying of the vehicle from an upright position into a carrying position in which the handle is at a top of the vehicle. The frame includes a first deflector at the first side of the wheel, and a second deflector at the second side of the wheel. Each one of the first and second deflectors is movable between a laterally retracted position, and a laterally extended position in which the deflector extends laterally from a top region of the respective one of the first and second cavities farther outward than in the laterally retracted position, and laterally outboard from the wheel to inhibit contact between a respective leg of the user with the wheel.

Optionally, for each one of the first and second deflectors, movement of a respective one of the first and second footrests to the deployed position holds the deflector in the laterally extended position and movement of a respective one of the first and second footrests to the folded position holds the deflector to the laterally retracted position.

Optionally, for each one of the first and second deflectors, the deflector is pivotably mounted to the frame for movement between the laterally retracted position and the laterally extended position, and wherein movement of a respective one of the first and second footrests to the deployed position causes movement of the deflector to the laterally extended position and movement of a respective one of the first and second footrests to the folded position causes movement of the deflector to the laterally retracted position.

### BRIEF DESCRIPTIONS OF THE DRAWINGS

For a better understanding of the various embodiments described herein and to show more clearly how they may be carried into effect, reference will now be made, by way of example only, to the accompanying drawings in which:
Figure 1 is a side view of an embodiment of the self-balancing vehicle, in a stowage position;
Figure 2 is a front view of the vehicle shown in Figure 1, in the stowage position;
Figure 3 is a perspective view of the vehicle shown in Figure 1, in the stowage position;
Figure 4 is a side view of the vehicle shown in Figure 1, in a use position;
Figure 5 is a sectional view of the vehicle shown in Figure 4, along section A-A;
Figure 6 is a sectional perspective view of the vehicle shown in Figure 1, with one footrest in a deployed position and one footrest in a folded position;
Figure 7 is a front view of the vehicle shown in Figure 1, in a use position with one footrest in contact with the ground;
Figure 8A is a sectional front view of the vehicle shown in Figure 1, showing a latching member in a release position;
Figure 8B is a sectional front view of the vehicle shown in Figure 1, showing the latching member in a locking position;
Figure 8C is a magnified front view of the latching member shown in Figures 8A and 8B;
Figure 9 is a magnified front view of a pivot joint between one of the footrests and a frame of the vehicle shown in Figure 1 ;
Figure 10 is a perspective view of the vehicle shown in Figure 1, in the use position;
Figure 11A is a sectional front view of a vehicle that is a variant of the vehicle shown in Figure 1, in the stowage position, showing two deflectors in a laterally retracted position; and
Figure 11B is a sectional front view of the vehicle shown in Figure 11A, with one footrest in the deployed position, showing one of the deflectors in a laterally extended position.

### DETAILED DESCRIPTION

For simplicity and clarity of illustration, where considered appropriate, reference numerals may be repeated among the Figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Various terms used throughout the present description may be read and understood as follows, unless the context indicates otherwise: "or" as used throughout is inclusive, as though written "and/or"; singular articles and pronouns as used throughout include their plural forms, and vice versa; similarly, gendered pronouns include their counterpart pronouns so that pronouns should not be understood as limiting anything described herein to use, implementation, performance, etc. by a single gender; "exemplary" should be understood as "illustrative" or "exemplifying" and not necessarily as "preferred" over other embodiments. Further definitions for terms may be set out herein; these may apply to prior and subsequent instances of those terms, as will be understood from a reading of the present description.

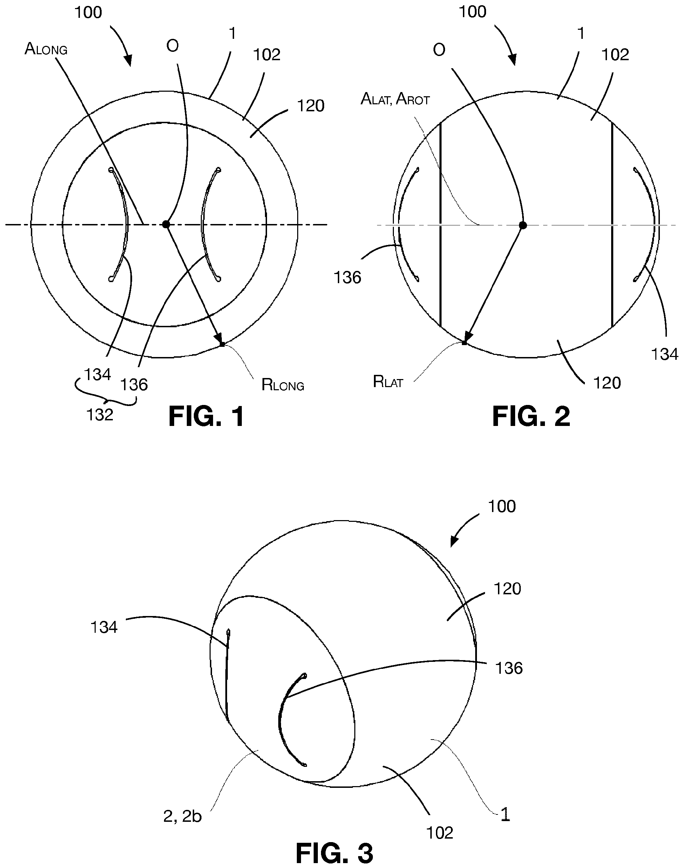

Reference is made to Figures 1-11B, which show a self-balancing vehicle 100 in accordance with an embodiment of the present disclosure. The vehicle 100 is, in some embodiments, generally spherical in shape, for reasons which are explained further below. The vehicle 100 includes a frame 101, a wheel 102, a first footrest 2a and a second footrest 2b (wherein the footrests are also generally identified at 2), a motor 104 and a control system 106. The frame 101 optionally includes a fixed shaft 15, an internal component support structure 108 that is mounted to a central region of the fixed shaft 15, a first footrest support structure 110a mounted to a first end of the fixed shaft 15, and a second footrest support structure 110b mounted to a second end of the fixed shaft 15. A controller 21 that is part of the control system 106, is supported by the internal component support structure 108. A plurality of batteries 20 are also supported by the internal component support structure 108. Preferably, the controller 21 is supported above the batteries 20, thereby lowering the center of mass shown at CMV of the vehicle 100. Preferably, a majority of the batteries 20 are positioned below the geometric center so as to lower the center of mass CMV of the vehicle 100.

The wheel 102 is rotatably supported on the frame 101 about an axis of rotation A_{ROT}. In the present example, the wheel 102 has a hub 112 which includes a first hub portion 112a and a second hub portion 112b which together support a rim 114 via a plurality of mechanical fasteners 116. A tire 1 is shown supported on the rim 114. The hub portions 112a and 112b are rotatably supported on the fixed shaft 15 by means of a first bearing 118a and a second bearing 118b.

The wheel 102 has a longitudinal axis A_{LONG}, a lateral axis A_{LAT} that is coaxial with the axis of rotation A_{ROT} and has a geometric center O that is on the axis of rotation A_{ROT} and on the longitudinal axis A_{LONG}. In the present example, the lateral axis ALAT is the same as (i.e. is coaxial with) the axis of rotation A_{ROT}, and intersects the longitudinal axis A_{LONG} at the geometric center O. The wheel 102 has a ground engagement surface 120 that is, in the present example, the exterior surface of the tire 1. In some embodiments, the ground engagement surface 120 has a longitudinal radius of curvature R_{LONG} and a lateral radius of curvature R_{LAT} that is at most 10% greater or less than the longitudinal radius of curvature R_{LONG}. In a preferred embodiment, R_{LONG} and R_{LAT} are equal.

The motor 104 is provided to drive rotation of the wheel 102 relative to the frame 101. The motor 104 includes a stator 12 that is mounted to the internal component support structure 108, and a rotor 13 that is mounted to an interior surface of the wheel 102, radially outside of and in close proximity to the stator 12. Power for the motor 104 is provided by the batteries 20 via the controller 21. The motor 104 may be a brushless DC motor, or any other suitable kind of motor. Due to the spherical shape of the vehicle 100 the motor 104 may be relative wider than other motors typically used in self-balancing vehicles, which permits the motor to generate a relatively high torque. This permits the motor 104 to be capable of balance correction in a larger range of conditions than other motors in some prior art self-balancing vehicles.

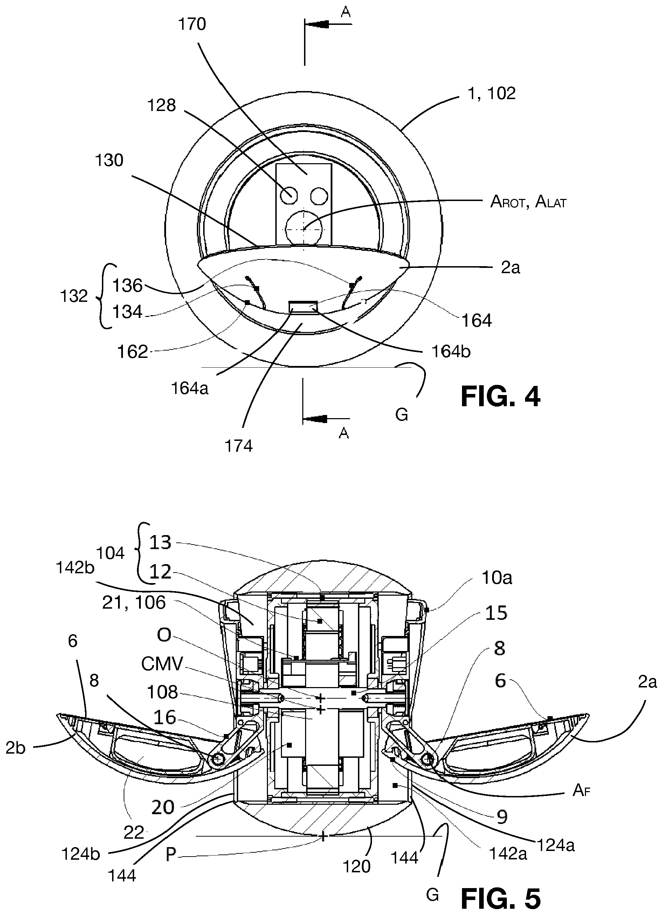

The first footrest 2a is located on a first side 124a of the wheel 102 and the second footrest 2b is located on a second side 124b of the wheel 102. Each of the first and second footrests 2a and 2b has a foot support surface 6 and is movable relative to the frame 101 between a folded position (Figures 1-3) in which the foot support surface 6 is adjacent a respective one of the first and second sides 124a and 124b of the wheel 102, and a deployed position (Figures 4-7) in which the foot support surface 6 faces upwards for receiving and supporting a foot of a user (the feet of the user being shown at F1 and F2).

In the example embodiment shown, for each footrest 2a, 2b, the frame 101 contains a magnet 128 (Figure 4) that is engageable with a magnetically responsive element 130 on the footrest 2 so that the footrest 2 is magnetically held by a magnetic force F_{MAG} to a remainder of the self-balancing vehicle when in the folded position. The magnetically responsive element 130 may be a ferromagnetic material such as steel, or it may itself be another magnet. In the present example the magnetically responsive element 130 is the plate that forms the foot support surface 6. It is alternatively possible to provide the magnet 128 on the footrest 2 and to provide the magnetically responsive element 130 on the frame 101. Providing a magnetic force to hold the footrest 2 in the folded position makes it a simple process to fold and unfold each footrest.

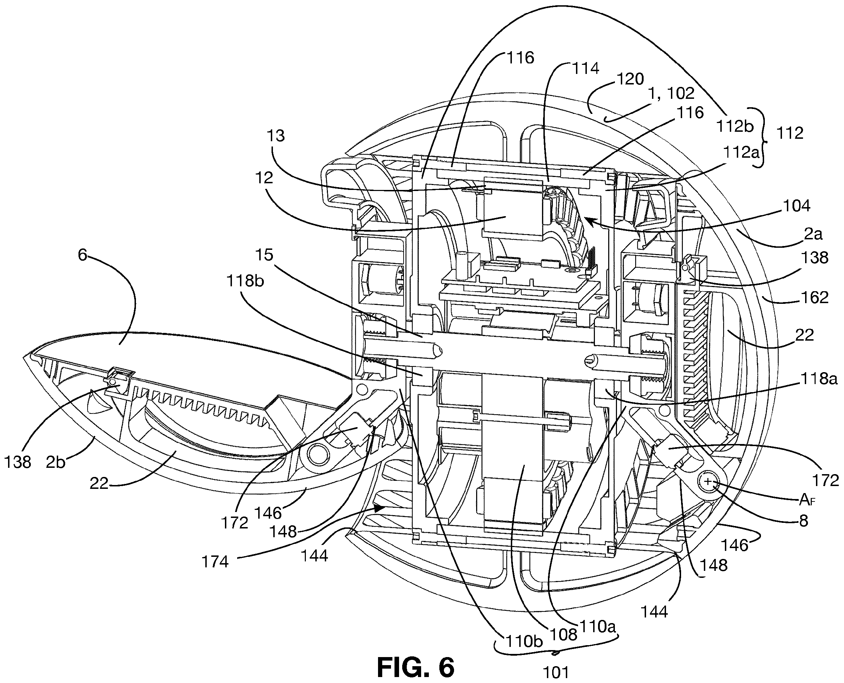

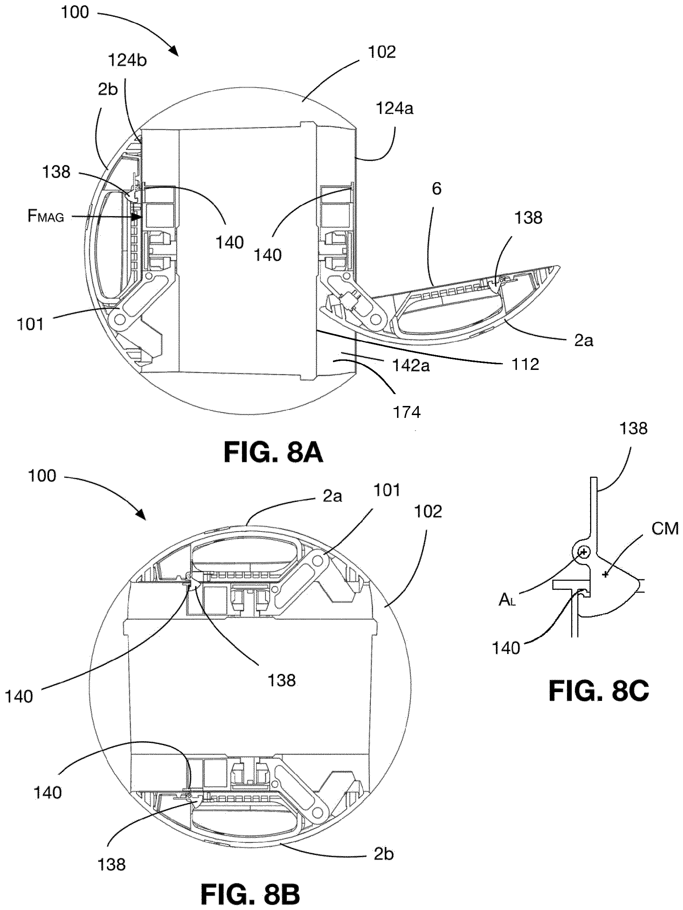

When the vehicle 100 is picked up and carried for transport, it may be held in a carrying position wherein the vehicle 100 is oriented on its side, as shown in Figure 8B. In the example embodiment shown, each of the footrests 2 has a handle 132 thereon. The handle 132 may be formed by a first recess 134 and a second recess 136 in an outer surface of the footrest 2 as shown in Figures 1-4. The first and second recesses 134 and 136 together permit a user to insert fingers therein so as to grip and pick up the vehicle 100. In some embodiments, the first and second recesses 134 and 136 are formed in an elastomeric skin that the user inserts their fingers through to grip an internal gripping member 22 as shown in Figure 6.

In some embodiments, the magnetic force F_{MAG} is sufficiently strong to hold a weight of the footrest 2 when in the folded position when the vehicle 100 is oriented with the footrest 2 at a bottom of the vehicle 100 (e.g. Figures 1-3), and is sufficiently weak so as to be unable to hold a weight of the remainder of the self-balancing vehicle 100 against the footrest 2 in the folded position when the vehicle 100 is oriented with the footrest 2 at a top of the vehicle 100 (e.g. when the vehicle were being carried by the handle 132). If the magnetic force F_{MAG} were sufficiently strong to hold the remainder of the vehicle 100 when the vehicle 100 is being carried by the handle 132, it would make it somewhat difficult to unfold the footrest 2 when desired to use the vehicle 100.

It has been found that it is beneficial for the footrest 2a, 2b to have a thickness (a depth) of at least about 30mm in order for the first and second recesses 134 and 136 to have sufficient depth to be easily useable to carry the vehicle 100.

Accordingly, to keep the magnetic force F_{MAG} sufficiently low, as described above, the self-balancing vehicle 100 may further comprise a latch member 138 and a latch receiving surface 140, shown in Figures 8A-8C. The latch member 138 and the latch receiving surface 140 will now be described in relation to the first footrest 2a. The latch member 138 is pivotably connected to one of the frame 101 and the first footrest 2a about a latch pivot axis A_{L}, and the latch receiving surface 140 is on the other of the frame 101 and first footrest 2a. In the example shown, the latch member 138 is pivotably connected to the first footrest 2a, and the latch receiving surface 140 is on the frame 101. The latch member 138 is pivotable between a locking position (Figure 8B) in which the latch member 138 engages the latch receiving surface 140 to lock the first footrest 2a in the folded position, and a release position (Figure 8A) in which the latch member 138 is disengaged from the latch receiving surface 140 to permit the first footrest 2a to move to the deployed position.

As can be seen in Figure 8C, the latch member 138 has a center of mass CM that is offset from the latch pivot axis A_{L}, such that when the self-balancing vehicle 100 is in the upright position the center of mass CM of the latch member 138 causes the latch member 138 to pivot to the release position (Figure 8A), and when the self-balancing vehicle 100 is in the carrying position (Figure 8B), the center of mass CM of the latch member 138 causes the latch member 138 to pivot to the locking position. In the locking position, the latch member 138 holds the footrest 2a in the folded position so that the vehicle 100 can be picked up using the handle 132.

The latch member 138 and the latch receiving surface 140 may be a first latch member 138 and a first latch receiving surface 140, and the vehicle 100 may include a second latch member 138 and a second latch receiving surface 140 for the second footrest 2b, which operate the same way to hold the second footrest 2b in the folded position as the first latch member 138 and the first latch receiving surface 140 do for the first footrest 2a.

In the presently described example, the latch member 138 and the latch receiving surface 140 provide a way of locking the footrest 2a, 2b whose handle 132 is being used to pick up the vehicle 100, without requiring a complicated mechanism that is composed of many components. Additionally, the latch member 138 and the latch receiving surface 140 operate automatically, without requiring the user to manually activate them or deactivate them.

It will be noted that the latch member 138 and the latch receiving surface 140 would be advantageous on vehicles that do not have a spherical shape, and on vehicles that are not provided with the capability of being tippable laterally when in the use position such that the support structure engages the ground and cooperates with a ground-engaging point on the wheel to stably support the self-balancing vehicle when a user stands on said at least one of the footrests. The latch member 138 and the latch receiving surface 140 could be used with almost any vehicle employing a driven wheel flanked on both sides by laterally outboard footrests, wherein at least one of the footrests has a handle thereon, for picking up the vehicle for transport.

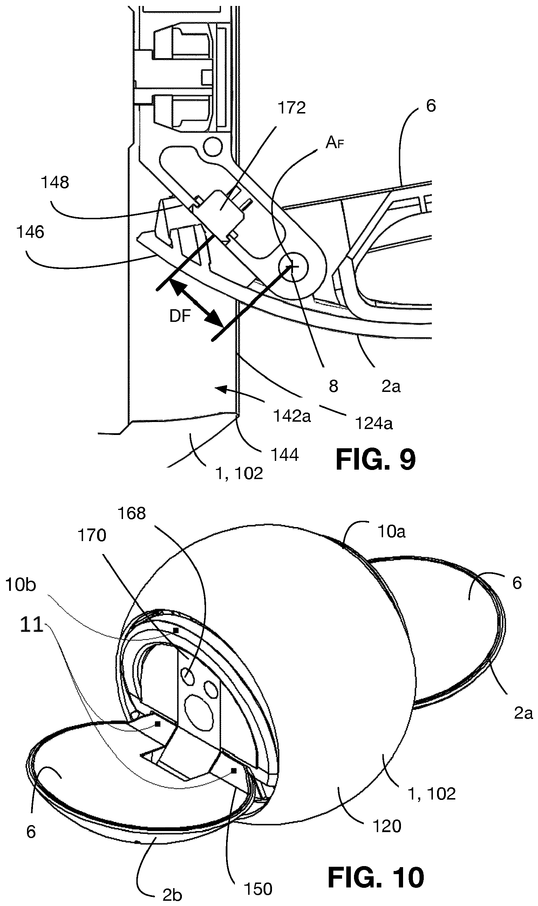

The structure to support the first and second footrests in the deployed position will now be described, with reference to Figure 9. In the embodiment shown, the wheel 102 defines a first side cavity 142a at the first side 124a of the wheel 102 and a second side cavity 142b at a second side 142b of the wheel 102. The first and second side cavities 142a and 142b are also shown generally at 142. For each one of the first and second footrests 2a and 2b, the footrest 2 is pivotally connected to the frame 101 via a hinge pin 8 defining a pivot axis A_{F} that is above a bottom (shown at 144) of a respective one of the first and second side cavities 142. As can be seen, the footrest 2 has a lower footrest portion 146 that is below the hinge pin 8 when the footrest 2 is in the folded position. The lower portion 146 is engageable with a deployment position limit surface 148 on the frame 101 in the respective one of the first and second side cavities 142 to support the footrest 2 in the deployed position.

It will be understood that a resistive moment must be applied by the limit surface 148 on the footrest 2 when supporting the weight of a user, since the user's weight applies a moment on the footrest 2. The resistive moment that must be applied is based on a distance between the axis A_{F} and the middle of the deployment position limit surface 148 (wherein the distance is shown at D_{F} in Figure 9), and based on the resistive force applied by the deployment position limit surface 148 on the footrest 2 when supporting the weight of a user. Thus, by increasing the distance D_{F}, the resistive force that is needed to be applied by the deployment position limit surface 148 on the footrest 2, is reduced proportionately, and the stress on the hinge pin 8 itself is also reduced as a result of the reduced force applied. By increasing the distance between the hinge pin 8 and the bottom 144 of the respective one of the first and second side cavities 142, a relatively large amount of the footrest 2 can be the lower portion 146, which means that a relatively large distance D_{F} can be provided. By contrast, if one were to put the deployment position limit surface 148 outboard of the hinge pin 8, it would face upwards, but more importantly it would have to be positioned quite close to the hinge pin 8 so as to ensure that it did not interfere with the generally spherical shape of the vehicle 100.

Thus, by providing a deployment position limit surface 148 that is inboard of the hinge pin 8 and internal to respective one of the first and second side cavities 142, the distance D_{F} can be made large, which is advantageous as explained above.

It will be noted that, due to the position of the deployment position limit surface 148 relative to the pivot axis A_{F} and the foot support surface 6, the deployment position limit surface 148 faces downwards in order to provide the resistive moment.

The self-balancing vehicle 100 is positionable in a stowage position (Figures 1-3) in which the first and second footrests 2a and 2b are in the folded position, and wherein the self-balancing vehicle possesses a spherical outer shape. The self-balancing vehicle 100 is positionable in a use position in which the first and second footrests 2a and 2b are in the deployed position.

In the use position, the user may stand on the first and second footrests 2a and 2b, and control the operation of the vehicle 100 in any suitable way. For example, the user may tip the vehicle 100 forward or rearward to control the speed of the vehicle. The control system 106 incorporates one or more sensors to detect the orientation of the vehicle 100, and controls the speed of the motor 104 based on signals from the one or more sensors. One of the one or more sensors may be a gyro sensor, for example or a three-axis accelerometer. Furthermore, the control system 106 may control the motor 104 in order to attempt to keep the vehicle in balance, by detecting changes in the orientation of the vehicle 100 and sending power to the motor 104 as appropriate in order to keep the vehicle 100 upright. Based on the above, the control system 106 controls operation of the motor 104 based at least in part on an orientation of the self-balancing vehicle 100.

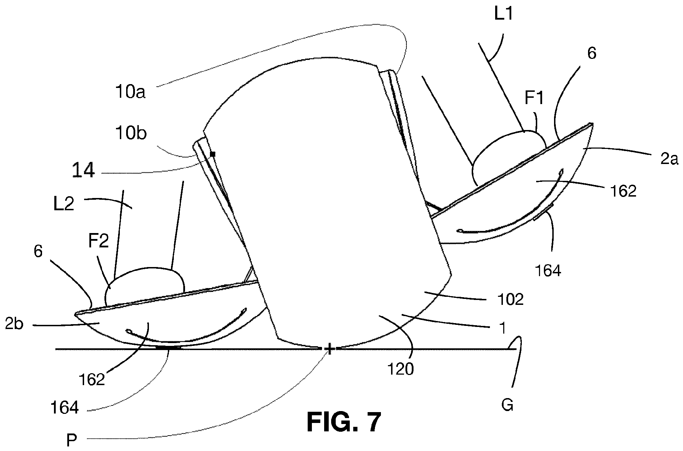

Prior to driving the vehicle 100, the user gets on the vehicle 100. To do that, the user may step with one foot (e.g. foot F2 as shown in Figure 7) on a first one of the deployed footrests 2a, 2b (the second footrest 2b in the example shown in Figure 7). The exterior surface (shown at 162) of that footrest (the second footrest 2b in the example shown in Figure 7) has an optional support structure 164 extending outwards therefrom. The support structure 164 is preferably made of a hard material such as a metal, which is resistant to wear compared to the elastomeric material that is optionally provided on a surrounding portion of the footrests 2a and 2b. The support structure 164 extends longitudinally and cooperates with the ground-engaging point P on the wheel 102 to stably support the self-balancing vehicle 100 when the user stands on that footrest 2a, 2b (the second footrest 2b in the example shown in Figure 7). The user can then place their other foot (e.g. foot F1 in Figure 7) on the other footrest 2a, 2b (the first footrest 2a in the example shown in Figure 7). To launch the vehicle 100 the user can tip the vehicle 100 forward slightly while pushing down with the other foot F1 so as to lift the ground-engaged footrest 2a, 2b (second footrest 2b in the example shown in Figure 7) off the ground. This will cause the control system 106 to drive the motor 104 to propel the vehicle 100 forward. While the ground-engaged footrest 2a, 2b is engaged with the ground (due to a person's foot applying pressure to it), the control system 106 may be equipped to detect this and may cause the rotor 13 to remain locked rotationally relative to the stator 12 by a selected method of controlling the current to the phases of the motor 104, or a selected method of short-circuiting the motor 104. This will help to stabilize the vehicle 100 by preventing rotation of the wheel 102 on the ground. The ground is shown at G in Figures 5 and 7. This facilitates a user getting on the vehicle 100 in order to launch it.

In some embodiments, a first portion 164a (Figure 4) of the support structure 164 is positioned longitudinally forward of the lateral axis A_{LAT} of the wheel 102 and a second portion 164b of the support structure is positioned longitudinally rearward of the lateral axis A_{LAT}. In a preferred embodiment, the first portion 164a and the second portion 164b are equidistant from the lateral axis.

In order to maintain the sphericality of the vehicle 100 when in the stowage position, it is preferable for the support structure 164 to not extend outwards from the exterior surface 162 by more than 2.5% of the lateral radius of curvature R_{LAT} of the vehicle 100. In an example, both the longitudinal and the lateral diameters of curvature of the vehicle 100 are approximately 244mm (which is approximately the dimension of a typical soccer ball (220mm) or of a typical basketball (234mm), and the support structure extends by less than 3.4mm from the exterior surface 162, which is less than about 1.4%. An advantage of the sphericality of the vehicle 100 is that a user can transport the vehicle 100 by rolling it like a ball instead of lifting it and carrying it from one place to another. It has been found that, by keeping the support structures from projecting more than 2.5% of the lateral radius of curvature R_{LAT} of the vehicle 100, the vehicle 100 can still roll sufficiently predictably for the purpose of transport of the vehicle 100.

Additionally, it is beneficial to limit the amount that the support structure 164 projects from the exterior surface 162 of the footrest so as to ensure that the vehicle 100 has enough clearance to avoid scraping the ground when being tipped laterally during a turning maneuver. By limiting the amount by which the support structure 164 projects, as noted above, the vehicle 100 can be tipped by up to 15 degrees or more during a turn, which has been found to be sufficient.

In addition to controlling how much the support structures 164 extend from the exterior surfaces 162 of the footrests 2a and 2b, and in addition to providing not more than a 10% difference between the longitudinal radius of curvature and the lateral radius of curvature, it is also advantageous keep the center of mass CMV close to the geometric center O of the vehicle. In a preferred embodiment, the center of mass CMV is less than a quarter of the longitudinal radius of curvature R_{LONG} away from the geometric center O of the wheel 102. It has been found that when this condition is met, the vehicle 100 is easy to roll along the ground in order to transport it from one place to another. It will also be noted that, while all of these features in combination provide good results for rolling the vehicle 100 in this way, it is possible for the vehicle 100 to have any one of these features and still represent an improvement over vehicles of the prior art.

While it is described above that it is advantageous to keep the center of mass CMV relatively close to the geometric center O, it is also advantageous for the center of mass CMV to be below the geometric center O at least by some small amount, so that, when the vehicle 100 is placed on the ground and the footrests 2a and 2b are opened, the vehicle 100 will find an equilibrium position in which the footrests 2a and 2b face upwards for receiving the feet of the user.

When a user stands on a vehicle with a central wheel and footrests on either side of the central wheel, it is possible for them to accidentally touch the wheel 102 with their leg unless there is some kind of protection to inhibit it. The present vehicle 100, however, is in some embodiments intended to have a spherical shape, which precludes the provision of a fixed guard or fairing that partially surrounds the wheel 102, since such an item would detract from the spherical shape of the vehicle 100. Several optional features may be provided on each of the footrests 2 to inhibit contact between the legs of the user (the legs being shown at L1 and L2) and the wheel 102. For example one optional feature is described as follows, with reference to Figure 10. Each foot support surface 6 has an inboard edge 150 that is laterally outboard of the wheel 102, and is bounded by a foot support surface limit surface 11 that extends upwardly from the inboard edge 150 to inhibit a user from placing a foot F1 or F2 inboard of the foot support surface 6.

By selecting the position of the inboard edge 150, a user that has a typical leg height will clear the wheel 102 with their legs L1 and L2 even if their legs L1 and L2 are placed right at the inboard edge of the foot support surface 6.

In the example embodiment the foot support surface 6 has a length of greater than about 120mm, and a width of greater than about 60mm. In some embodiments, the foot support surface 6 may have a mostly circular shape with a diameter of about 150mm.

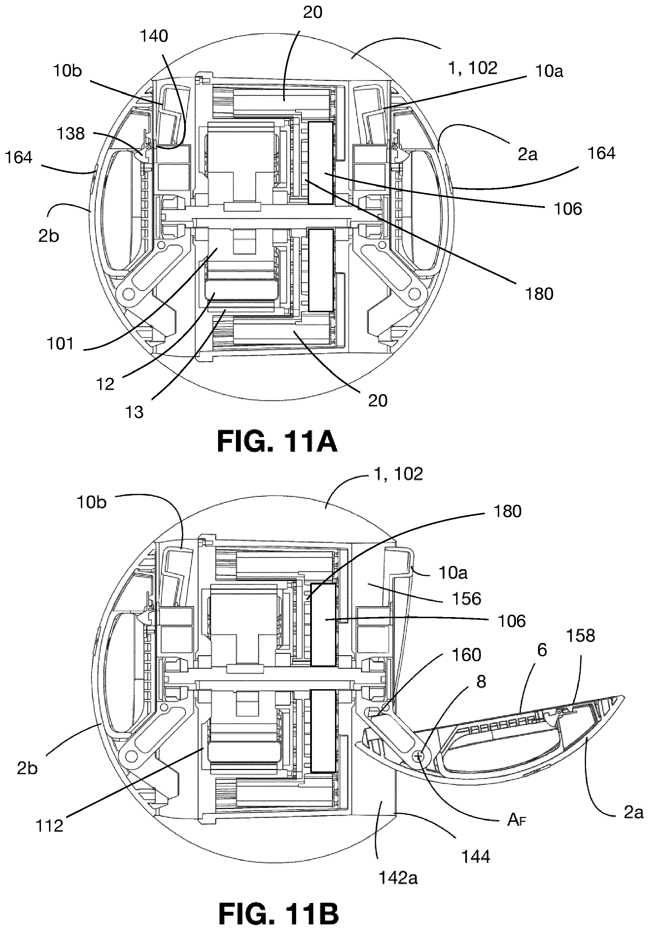

Another optional feature to inhibit a user's legs L1 and L2 from contacting the wheel 102 during use is to provide the frame 101 with a first deflector 10a at the first side 124a of the wheel 102, and a second deflector 10b at the second side 124b of the wheel 102. The deflectors 10a and 10b. Each one of the first and second deflectors 10a and 10b is movable between a laterally retracted position (Figure 11A), and a laterally extended position (see deflector 11a in Figure 11A) in which the deflector 10a, 10b extends laterally from a top region 156 of the respective one of the first and second cavities 124a, 124b farther outward than in the laterally retracted position, and laterally outboard from the wheel 102 to inhibit contact between a respective leg L1, L2 of the user with the wheel 102.

In the example embodiment shown, for each one of the first and second deflectors 10a and 10b, movement of a respective one of the first and second footrests 2a, 2b to the deployed position holds the deflector 10a, 10b in the laterally extended position and movement of a respective one of the first and second footrests 2a, 2b to the folded position holds the deflector 10a, 10b to the laterally retracted position. In the present example, each deflector 10a, 10b is pivotally mounted to the frame 101 for movement between the laterally retracted position and the laterally extended position. The footrests 2a, 2b each have a deflector retraction drive surface 158 and a deflector extension drive surface 160. During movement of the footrest 2a, 2b to the folded position (Figure 11A), the deflector retraction drive surface 158 contacts and drives pivoting of the associated deflector 10a, 10b to the laterally retracted position, and during movement of the footrest 2a, 2b to the deployed position (see footrest 2a in Figure 11B), the deflector extension drive surface 160 contacts and drives pivoting of the associated deflector 10a, 10b to the laterally extended position. Thus, it can be said that movement of a respective one of the first and second footrests 2a, 2b to the deployed position causes movement of the deflector 10a, 10b to the laterally extended position and movement of a respective one of the first and second footrests 2a, 2b to the folded position causes movement of the deflector 10a, 10b to the laterally retracted position.

The deflectors 10a and 10b provide another way of protecting the legs L1 and L2 of the user while maintaining the spherical shape of the vehicle 100. It will be noted that the deflectors 10a and 10b could be used on vehicles that do not have a spherical shape so as to provide protection for the user's legs L1 and L2, and on vehicles that are not provided with the capability of being tippable laterally when in the use position such that the support structure engages the ground and cooperates with a ground-engaging point on the wheel to stably support the self-balancing vehicle when a user stands on said at least one of the footrests. The deflectors 10a and 10b could be used with almost any vehicle employing a driven wheel flanked on both sides by laterally outboard footrests.

In some embodiments, the vehicle 100 may be turned on manually by a user via a power switch 168 (Figure 10) that is on one of two panel faces 170 (Figures 4 and 10) that are accessible upon deployment of the footrests 2. Several other items may be present on the panel faces 170, such as, for example, a charge plug, and/or a battery level indicator, and/or a control panel for displaying and receiving user input for such properties as a speed limit, and/or an alarm that is activated by the controller 21 in selected conditions such as when the speed of the vehicle 100 reaches a selected speed and/or when the charge level of the vehicle 100 reaches a selected low threshold and/or when the motor 104 overheats.

Once the vehicle 100 is powered on, the control system 106 may lock the rotor 13 to the stator 12, instead of waiting until it detects one footrest 2 on the ground G so as to keep the vehicle 100 stable while the user gets on it. Any of the means described above may be used to lock the rotor 13 to the stator 12.

In some embodiments, the control system 106 is programmed for detecting a presence of a user on the vehicle, and is programmed to initiate self-balancing of the motor based on said detecting of a presence of the user on the vehicle. For example, in some embodiments, the control system 106 includes a user sensing arrangement 172 positioned for detecting force applied by a user being supported on at least one of the first and second footrests 2a and 2b and is programmed to initiate control of the motor 104 based on signals from the user sensing arrangement 170. In an example, the user sensing arrangement 172 may include, for example, a limit switch at one or both of the deployment position limit surfaces 148. The limit switch may be equipped with a resistance spring that resists actuation of the limit switch unless a certain amount of weight is applied to the respective footrest 2. For example, the resistance spring may be selected such that the weight of the footrest 2 alone is not sufficient to actuate the limit switch but a weight of 30 lbs or more (or any other suitable weight is sufficient to actuate the limit switch. Thus, for a vehicle 100 that includes two such limit switches a user that weighs 60 lbs will apply 30 lbs of their weight to each footrest 2, actuating the respective limit switch.

Upon detection that the user has gotten on the vehicle 100 (e.g. is standing with one foot on each footrest 2a, 2b applying sufficient force to each), and detection that the user has brought the vehicle 100 to within a selected activation angle from horizontal, the control system 106 may unlock the motor 104 and may initiate the self-balancing function. The selected activation angle from horizontal may be, for example about 10 degrees. Optionally, the control system 106 may require the user to keep the vehicle 100 within the selected angle from horizontal for a selected amount of time, such as .25 seconds before initiating the self-balancing function. Being within a selected angle from horizontal as mentioned above means that the axis of rotation A_{ROT} is within the selected activation angle from horizontal.

Based on the above, it can be said that the control system is programmed to determine that the user is present on the vehicle based on at least one of the following conditions:
whether a sufficient force is applied to each of the first and second footrests; and
whether the vehicle is within a selected activation angle from horizontal.

As the user rides the vehicle 100 they may, during turning, lean the vehicle 100 over such that the axis of rotation A_{ROT} is outside of the selected angle from horizontal. If this is at a speed that is greater than a selected speed, then this will not cause the control system 106 to deactivate the self-balancing or to cut power to the motor 104. However, if the control system 106 detects that the angle of the vehicle 100 is greater than a selected deactivation angle from horizontal, which may be, for example, 20 degrees and detects that the speed of the vehicle 100 is less than a selected deactivation speed, such as, for example, 5 kph or 3 kph, the control system 106 may cut power to the motor 104 and let the vehicle 100 coast to a stop. Optionally, the control system 106 may apply some magnetic braking during this period to assist in stopping the vehicle 100. Optionally, once the control system 106 detects that the vehicle 100 is stopped after cutting power to the motor 104, the control system 106 may lock the rotor 13 to the stator 12 in order to assist in keeping the vehicle 100 stable while the user dismounts from it.

Another optional feature of the vehicle 100 is a safety feature in which the control system 106 is programmed to cut power to the motor 104 if the control system 106 determines an inclination of the lateral axis A_{LAT} for the self-balancing vehicle 100 is greater than 45 degrees away from horizontal, so as to ensure that the user can pick up the vehicle 100 by the handle 132 without inadvertently driving the wheel 102, even in the event that the user forgets to turn the vehicle 100 off via the power switch.

In the present example vehicle 100 it will be noted that the distance between the foot support surface 6 and the axis of rotation A_{ROT} is less than 51mm, which means that the user can quickly pivot the vehicle 100 into a position where the footrests 2 are oriented rearwardly, which initiates magnetic braking by the motor 104. Energy generated during the braking process can be collected and sent to the batteries 20.

It will be noted that the rotor 13 and stator 12 of the motor 104 are able to generate a large amount of torque, due to their large diameter and large width. As a result, heat dissipation is particularly important for the vehicle 100. As can be seen in Figures 6 and 8A in particular, the hub 112 of the wheel 104 is directly exposed to the ambient environment via a large air passage 174 underneath the footrests 2a and 2b when they are in their deployed positions. Being directly exposed in the present sense means that there is direct contact with the ambient environment without passing through an aperture in any other component.

The vehicle 100 shown in Figures 11A and 11B includes some alternative structure as compared to the vehicle 100 shown in Figure 1. For example, the batteries 20 of the vehicle 100 in Figures 11A and 11B are arranged in a circle radially outside the stator 12 of the motor 104 instead of being radially inside of the stator 12 in the embodiment shown in Figure 5. Another structural difference is that the stator 12 and rotor 13 in Figures 11A and 11B are both offset laterally from the geometric center O of the wheel 102, which leaves a lateral gap 180 adjacent the stator 12 and rotor 13 in which the controller 21 is positioned. Optionally, one or more weights (not shown) may be positioned in the lateral gap 180 or even in whichever of the footrests 2 is adjacent the lateral gap 180, in order to balance the vehicle 100, though it is alternatively possible for the center of mass CMV of the vehicle 100 to be offset laterally from the geometric center O (while still being below the geometric center O). It will be noted that, in the embodiment shown in Figures 11A and 11B, the hub 112 of the wheel 104 is also directly exposed to the ambient environment via a large air passage underneath the footrest 2b when the footrest 2b is in its deployed position. Thus, for the embodiments shown in Figures 6 and 8A and in 11A and 11B, it can be said that the motor 104 includes a hub 112 that is directly exposed to the ambient environment outside the vehicle 100 when the footrests 2 are in their deployed positions, which assists in improving heat dissipation from the motor 104, thereby permitting it to generate high torque with less risk of overheating.

Persons skilled in the art will appreciate that there are yet more alternative implementations and modifications possible, and that the above examples are only illustrations of one or more implementations. The scope, therefore, is only to be limited by the claims appended hereto and any amendments made thereto.

## Claims

1. A self-balancing vehicle, comprising:
a frame;
a wheel that is rotatably supported on the frame about an axis of rotation, wherein the wheel has a longitudinal axis, and has a lateral axis that is coaxial with the axis of rotation, and has a geometric center that is on the axis of rotation and on the longitudinal axis, wherein the wheel further has a ground engagement surface that has a longitudinal radius of curvature and a lateral radius of curvature that is at most 10% greater or less than the longitudinal radius of curvature;
a first footrest located on a first side of the wheel and a second footrest located on a second side of the wheel, wherein each of the first and second footrests has a foot support surface and is movable relative to the frame between a folded position in which the foot support surface is adjacent a respective one of the first and second sides of the wheel, and a deployed position in which the foot support surface faces upwards for receiving and supporting a foot of a user;
wherein the self-balancing vehicle is positionable in a stowage position in which the first and second footrests are in the folded position, and wherein the self-balancing vehicle possesses a generally spherical outer shape, wherein the center of mass is less than a quarter of the longitudinal radius of curvature away from the geometric center of the wheel,
wherein the self-balancing vehicle is positionable in a use position in which the first and second footrests are in the deployed position;
a motor that drives rotation of the wheel relative to the frame; and
a control system that controls operation of the motor based at least in part on an orientation of the self-balancing vehicle.

2. A vehicle as claimed in claim 1, wherein the center of mass is below the geometric center when the self-balancing vehicle is in the use position.

3. A vehicle as claimed in claim 1, wherein the wheel defines a first side cavity at the first side of the wheel and a second side cavity at a second side of the wheel, and wherein, for each one of the first and second footrests, the footrest is pivotally connected to the frame via a hinge pin defining a pivot axis that is above a bottom of a respective one of the first and second side cavities, such that the footrest has a lower footrest portion that is below the hinge pin when the footrest is in the folded position, wherein the lower portion is engageable with a downwardly-facing limit surface on the frame in the respective one of the first and second side cavities to support the footrest in the deployed position.

4. A self-balancing vehicle as claimed in claim 1, wherein the frame holds a stator of the motor, a controller and a gyro sensor from the control system, and a plurality of batteries that are used to power the control system and provide power to drive the motor.

5. A self-balancing vehicle as claimed in claim 4, wherein a majority of the plurality of batteries are positioned below the axis of rotation of the wheel.

6. A self-balancing vehicle as claimed in claim 1, **characterized in that** each foot support surface has an inboard edge that is laterally outboard of the wheel, and is bounded by a foot support surface limit surface that extends upwardly from the inboard edge to inhibit a user from placing a foot inboard of the foot support surface.

7. A self-balancing vehicle according to claim 1, wherein the frame includes a first deflector at the first side of the wheel, and a second deflector at the second side of the wheel, wherein each one of the first and second deflectors is movable between a laterally retracted position, and a laterally extended position in which the deflector extends laterally from a top region of the respective one of the first and second cavities farther outward than in the laterally retracted position, and laterally outboard from the wheel to inhibit contact between a respective leg of the user with the wheel.

8. A self-balancing vehicle according to claim 7, wherein, for each one of the first and second deflectors, movement of a respective one of the first and second footrests to the deployed position holds the deflector in the laterally extended position and movement of a respective one of the first and second footrests to the folded position holds the deflector to the laterally retracted position.

9. A self-balancing vehicle according to claim 7, wherein, for each one of the first and second deflectors, the deflector is pivotably mounted to the frame for movement between the laterally retracted position and the laterally extended position, and wherein movement of a respective one of the first and second footrests to the deployed position causes movement of the deflector to the laterally extended position and movement of a respective one of the first and second footrests to the folded position causes movement of the deflector to the laterally retracted position.

10. A self-balancing vehicle as claimed in claim 1, wherein the outer surface of at least one of the first and second footrests includes a first recess and a second recess, wherein the first and second recesses together form a handle to permit a user to insert fingers therein so as to grip and pick up the self-balancing vehicle.

11. A self-balancing vehicle as claimed in claim 1, wherein the first footrest has a handle thereon and is tipped during carrying of the self-balancing vehicle from an upright position into a carrying position in which the handle is at a top of the self-balancing vehicle,
wherein the self-balancing vehicle further comprises a latch member and a latch receiving surface,
wherein the latch member is pivotably connected to one of the frame and the first footrest about a latch pivot axis between a locking position in which the latch member engages the latch receiving surface to lock the first footrest in the folded position, and a release position in which the latch member is disengaged from the latch receiving surface to permit the first footrest to move to the deployed position,
wherein the latch receiving surface is on the other of the frame and first footrest,
wherein the latch member has a center of mass that is offset from the latch pivot axis, such that when the self-balancing vehicle is in the upright position the center of mass of the latch member causes the latch member to pivot to the release position and when the self-balancing vehicle is in the carrying position, the center of mass of the latch member causes the latch member to pivot to the locking position.

12. A self-balancing vehicle as claimed in claim 11, wherein, for each footrest of the first and second footrests, the footrest is magnetically held by a magnetic force to a remainder of the self-balancing vehicle when the footrest is in the folded position, wherein the magnetic force is sufficiently strong to hold a weight of the footrest when in the folded position when the self-balancing vehicle is oriented with the footrest at a bottom of the self-balancing vehicle, and is sufficiently weak so as to be unable to hold a weight of the remainder of the self-balancing vehicle against the footrest in the folded position when the self-balancing vehicle is oriented with the footrest at a top of the self-balancing vehicle.

13. A self-balancing vehicle as claimed in claim 1, wherein the control system is programmed to cut power to the motor if the control system determines an inclination for the lateral axis of the self-balancing vehicle is greater than 45 degrees away from horizontal.

14. A self-balancing vehicle as claimed in claim 1, at least one of the footrests has an exterior surface with a support structure extending therefrom, wherein the self-balancing vehicle is tippable laterally when in the use position such that the support structure engages the ground and cooperates with a ground-engaging point on the wheel to stably support the self-balancing vehicle when a user stands on said at least one of the footrests.

15. A self-balancing vehicle as claimed in claim 14, wherein a first portion of the support structure is positioned longitudinally forward of the lateral axis of the wheel and a second portion of the support structure is positioned longitudinally rearward of the lateral axis of the wheel.
